# EUROPÄISCHE PATENTANMELDUNG

(11) **EP 3 595 256 A1**
(43) Veröffentlichungstag der Anmeldung: **15.01.2020**
(21) Anmeldenummer: 18183287.4
(22) Anmeldetag: 13.07.2018
(51) Int. Cl.: H04L 29/06, G06F 21/53, G06F 21/14, G06F 21/54, G06F 21/60, G06F 21/12

(54) **VORRICHTUNG UND VERFAHREN ZUM BETREIBEN EINER DURCH SOFTWARE GESTALTETEN VERARBEITUNGSEINHEIT FÜR EIN GERÄT**

(71) Anmelder: Siemens Aktiengesellschaft, 80333 München (DE)
(72) Erfinder: Falk, Rainer, 85586 Poing (DE)

(57) **Zusammenfassung**

Die Erfindung beansprucht eine Vorrichtung (TFDC) zum Betreiben einer durch Software gestalteten Verarbeitungseinheit (SDS) für ein Gerät, insbesondere ein Feldgerät (TFD), wobei die Vorrichtung nach einer vorgegebenen und/oder vorgebbaren Architektur mindestens einen Prozessor (CPU) und eine Anzahl von Hardware-Einheiten umfasst, aufweisend:
eine Sicherheitseinheit (IOS; MS), die dazu eingerichtet ist, eine Veränderung in der Anordnung der Datenbitfolge zumindest eines Datenstroms, welcher der Verarbeitungseinheit (SDS) bereitgestellt und/oder zu dieser geleitet wird, zum Schutze der Hardware-Einheiten vor Manipulation zu bewirken.

Die Verarbeitungseinheit ist vertrauenswürdig, d.h. ist geschützt vor Manipulation und Angriff von außen. Der Datenstrom geht vorzugsweise am Gerät ein.
Eine "Anzahl" bezeichnet hier und im Folgenden eine Zahl von eins oder mehr.

## Beschreibung

Die Erfindung betrifft eine Vorrichtung und ein Verfahren zum Betreiben einer durch Software gestalteten Verarbeitungseinheit für ein Gerät, insbesondere ein Feldgerät.

Es besteht ein Bedarf, um mit IT-Security-Mechanismen Produkte, beispielsweise Geräte (z.B. Steuereinheiten/-geräte, Internet-der-Dinge (IoT)-Geräte, embedded Geräte), Gerätekomponenten oder Softwarekomponenten, vor Manipulationen und/oder einem Reverse Engineering zu schützen. Kryptographische IT-Security-Mechanismen sind bereits beispielsweise in Smart Devices, beispielsweise in Geräten des Internets der Dinge (I-oT), von cyberphysikalischen Systemen, von Automatisierungssystemen oder von Fertigungssystemen, der Betriebstechnik und von anderen Anlagen in Einsatz.

Integrierte Halbleiterbausteine und insbesondere Prozessoren (CPUs) sind die Basis für Steuergeräte, die in kritischen Infrastrukturen eingesetzt werden. Die Problematik, dass eine Hardware-CPU absichtliche Schwachstellen (Backdoor, Hardware Trojaner) aufweisen kann, ist allgemein bekannt. Außerdem weist eine Hardware-Implementierung im Allgemeinen ebenso versehentlich Schwachstellen wie Software auf.
Für eine industrielle Anwendung von CPUs ist insbesondere die Integrität der CPU von hoher Bedeutung. Dadurch soll sichergestellt werden, dass die CPU keine Schwachstelle aufweist, durch die im operativen Betrieb eine Fehlfunktion oder eine Zerstörung (Kill Switch) auftritt. Dabei sind speziell Angriffe relevant, die über externe Daten (z.B. Netzwerkkommunikation) die CPU erreichen und zu einer Zerstörung führen.

Der Begriff "Security" bzw. "Sicherheit" bezieht sich im Rahmen der vorliegenden Beschreibung im Wesentlichen auf die Sicherheit bzw. Schutz, Vertraulichkeit und/oder Integrität von Daten sowie deren Übertragung und auch Sicherheit, Vertraulichkeit und/oder Integrität beim Zugriff auf entsprechende Daten. Auch die Authentifizierung bei Datenübertragungen beziehungsweise beim Datenzugriff gehört zum Begriff "Sicherheit", wie er im Rahmen der vorliegenden Beschreibung verwendet wird. Ein Modul kann hierbei als eine Hardware- und/oder Funktionseinheit, die software- und/oder firmwaremäßig ausgestaltet sein kann, ausgeprägt sein. Die Funktion kann beispielsweise mittels eines Prozessors und/oder einer Speichereinheit zum Speichern von Programmbefehlen ausgeführt werden.

Manipulationsgeschützt geht in der vorliegenden Beschreibung über den Begriff "Security" hinaus. Hierbei werden nicht nur die genannten kryptographischen bzw. Security-Methoden eingesetzt, sondern auch die Datenübertragung verlässlich gegen Angriffe bzw. Fremdzugriffe von außen sichergestellt.

Industrielle Geräte, z.B. Steuergeräte, Feldgeräte, IoT-Geräte oder IoT-Gateways, verwenden eine Mehrzahl von kryptographischen Schlüsseln, z.B. um sich zu authentisieren, um Integrität von gespeicherten Daten und Programmcode zu schützen, um Firmware-Updates zu prüfen und zu entschlüsseln und um die Integrität und ggf. die Vertraulichkeit von Projektierungs- und Konfigurationsdaten zu schützen. Um Daten, vor allem Steuerdaten, zu übertragen, können die genannten Geräte mit einer Datenschnittstelle ausgestattet sein, die drahtgebunden als auch als Drahtlos-Schnittstelle, z.B. eine WLAN-, eine Mobilfunk- (z.B. UMTS, LTE, 5G), eine Bluetooth- oder eine NFC-Schnittstelle (NFC: Near Field Communication) ausgebildet und eingerichtet sein. Mit Hilfe dieser Datenschnittstelle kann das Gerät an ein Netzwerk angebunden werden bzw. mit anderen Geräten kommunizieren.

Es sind weitere drahtlose bzw. funkbasierte Übertragungstechniken hierbei einsetzbar (z.B. Safety over WLAN wie z.B. ProfiSafe, WiMax, Cloud Robotics, GSM, UMTS, LTE, 5G, Vehicle-2-X-Communication für autonome Fahrzeuge bzw. autonomes Fahren, funkbasierte Zugsicherung ETCS). Auch kann funkbasiert eine Positionsinformationen (PVT: position, velocity, time) über ein Satellitennavigationssystem (GPS, Galileo, Beidou, Glonass) empfangen werden, die für eine Steuerungsfunktion des Geräts verwendet wird.

Es ist möglich, eine CPU als Soft-CPU auf einem programmierbaren Digitalbaustein (FPGA) zu realisieren. In der Praxis werden hier jedoch üblicherweise ebenfalls Design-Bibliotheken einer Soft-CPU verwendet, sodass auch hier durch den Anwender des Designs nicht ausgeschlossen werden kann, dass eine Schwachstelle im Design enthalten ist.

Es sind weiterhin Simulatoren/Emulatoren möglich, um eine einzelne CPU oder ein ganzes Computersystem auf einem anderen Computersystem zu simulieren. Beispielsweise wird berichtet, dass Microsoft an einer x86-Emulation für ARM-basierte Computer arbeitet, um allgemeine Windowsprogramme auch ohne x86-CPU ausführen zu können. Es sind Simulatoren/Emulatoren denkbar, die teilweise. frei verfügbar sind (z.B. RISC V Simulator rv8). Weiterhin ist möglich, einen CPU-Simulator in einem Web-Browser auszuführen und in dem Simulator ein Linux-System auszuführen. Es ist denkbar, dass CPUs sogenannte Management Engines aufweisen, mit denen ein Computersystem unabhängig vom installierten Betriebssystem verwaltet werden kann.

Im Safety-Umfeld ist aus dem Dokument von Martin Süßkraut, Jörg Kaienburg: Safety-Critical Smart Systems with Software Coded Processing, Smart Systems Integration, Copenhagen, 2015 ein Software Coded Processing bekannt.

Es besteht ein Bedarf, vertrauenswürdige Prozessoren bereitzustellen, insbesondere für eingebettete industrielle Geräte bzw. Systeme.

Es ist Aufgabe der vorliegenden Erfindung, Verfahren und Vor- bzw. Einrichtungen bzw. Einheiten insbesondere im industriellen Umfeld gegenüber dem oben genannten Stand der Technik zu verbessern.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung beansprucht eine Vorrichtung zum Betreiben einer durch Software gestalteten Verarbeitungseinheit für ein Gerät, insbesondere ein Feldgerät, wobei die Vorrichtung nach einer vorgegebenen und/oder vorgebbaren Architektur mindestens einen Prozessor und eine Anzahl von Hardware-Einheiten umfasst, aufweisend:
eine Sicherheitseinheit, die dazu eingerichtet ist, eine Veränderung in der Anordnung der Datenbitfolge (n) zumindest eines Datenstroms, welcher der Verarbeitungseinheit bereitgestellt und/oder zu dieser geleitet wird, zum Schutze der Hardware-Einheiten vor Manipulation (von außen) zu bewirken bzw. vorzunehmen.
Die Verarbeitungseinheit ist vertrauenswürdig, d.h. ist geschützt vor Manipulation und Angriff von außen. Der Datenstrom geht vorzugsweise am Gerät ein.
Eine "Anzahl" bezeichnet hier und im Folgenden eine Zahl von eins oder mehr.

Die vorliegende Erfindung verfolgt den Ansatz, Software (insbesondere Steuerungscode eines industriellen Steuerungssystems) auf einer Standard-Rechner-Hardware mit verbesserter Vertrauenswürdigkeit auszuführen (Trusted Execution on Untrusted Hardware Platforms).

Die Eingabe- und Ausgabedaten (I/O Daten) zur Außenwelt werden über eine Art separate Datenschleuse übertragen. Dies hat den Vorteil, dass die Ein-/Ausgabeschnittstellen des Prozessors von außen nicht zugänglich sind. Dadurch wird ein geschützter Datenpfad zur und von der durch Software gestalteten Verarbeitungseinheit realisiert, sodass von außen ein Zugriff auf die eigentliche Hardware bzw. Hardware-Einheiten unterbunden ist. Die Daten zwischen der Datenschleuse vorzugsweise "randomisiert" (d.h. zufällig angeordnet) über den Datenpfad übertragen (scrambled = verwürfelt, encrypted = verschlüsselt), sodass ein Außenstehender keine Kontrolle hat, welche Daten eine Hardware-Schnittstelle der Prozessor tatsächlich zu sehen bekommt. Es wird mit hoher Verlässlichkeit gewährleistet, dass externe Daten nicht die "Physik" (Hardware) erreichen. Dadurch wird verhindert oder zumindest erschwert, dass eine evtl. in der Prozessor-Hardware vorhandene Schwachstelle von außen durch einen Angreifer ausgenutzt werden kann.

Eine Weiterbildung der Erfindung sieht vor, dass die Verarbeitungseinheit die Anordnung der Datenbitfolge aus der veränderten Anordnung der Datenbitfolge insoweit rekonstruieren kann, dass die Datenbits der rekonstruierten Datenbitfolge vom Prozessor mit Unterstützung durch die Hardware-Einheiten verarbeitet werden können.

Eine Weiterbildung der Erfindung sieht vor, dass eine Steuereinheit dazu eingerichtet ist, basierend auf der die Verarbeitungseinheit gestaltenden Software (virtuell, Emulation) und mit Hilfe der vorgegebenen und/oder vorgebbaren Architektur ein Leiten bzw. Übertragen der rekonstruierten Datenbitfolgen zwischen Prozessor und den Hardwareeinheiten zu steuern.

"Software gestaltet" bedeutet im Zusammenhang mit der Erfindung, dass die Einheiten der Verarbeitungseinheit virtuell sind, d.h. durch Software gestaltet bzw. der ausführbare Softwarecode bzw. Programmcode die eine oder mehrere Einheiten bildet. Eine Steuereinheit der Verarbeitungseinheit kann als Emulator ausgebildet sein. Ein Emulator ist vorliegend ein Programm, das einen Computer nachbilden kann und es so ermöglicht, Software für diesen Computer, vorliegend die Vorrichtung, auf einem Computer (vorliegend: software defined System) mit einer anderen Architektur zu verwenden.

Unter "software-definiert (software defined)" ist insbesondere zu verstehen, dass Funktionalität der aus Einheiten gebildete (= Architektur) Verarbeitungseinheit nicht fest auf diesen Einheiten vorgegeben ist. Die Zuordnung der Funktionalität zu einer Einheit wird durch Software definiert bzw. festgelegt.

Ähnlich wie bei Software-Härtungsmaßnahmen kann so eine gehärtete software-definierte bzw. virtuelle CPU realisiert werden. Selbst wenn die verwendete Hardware-CPU (oder weitere Chips des Systems) Schwachstellen in der Hardware aufweisen sollten, wird das Ausnutzen der Schwachstellen durch einen Angreifer erschwert.

Eine Weiterbildung der Erfindung sieht vor, dass die Veränderung der Anordnung der Datenbitfolge (z.B. aus Ethernet) durch Kapselung von Datenbits aus der Datenbitfolge in mehrere (IP)-Datenpakete (gleicher oder variabler Länge) erreichbar ist.

Eine Weiterbildung der Erfindung sieht vor, dass die Veränderung der Anordnung der Datenbitfolge durch eine zeitlich verzögerte (vorgebbar) Übertragung der Datenpakete erreicht ist. Das Zeitverhalten der Außenschnittstelle (Ein-/Ausgabeschnittstelle etc.) kann demnach zufällig (random) gestaltet werden.

Eine Weiterbildung der Erfindung sieht vor, die Reihenfolge der Datenpakete (nach dem Zufallsprinzip) verwürfelt ist oder verwürfelt wird.

Eine Weiterbildung der Erfindung sieht vor, dass die in ihrer Anordnung veränderte Datenbitfolge einen gesicherten Datenpfad bildet.

Eine Weiterbildung der Erfindung sieht vor, dass die Veränderung der Anordnung der Datenbitfolge durch eine kryptographisehe Verschlüsselung bewirkt ist bzw. wird. oder bewirkt werden kann.

Eine Weiterbildung der Erfindung sieht vor, dass die Steuereinheit zudem eine Speichereinheit aufweist, die dazu eingerichtet ist, Daten aus der veränderten Datenbitfolge zu speichern.

Eine Weiterbildung der Erfindung sieht vor, dass die Daten in der Speichereinheit zufällig (örtlich, zeitlich) abgelegt werden kann (randomisiert).

Ein weiterer Aspekt der Erfindung ist ein Verfahren zum Betreiben einer durch Software gestalteten Verarbeitungseinheit für ein Gerät, insbesondere ein Feldgerät, welches eine Vorrichtung mit mindestens einem nach einer vorgegebenen und/oder vorgebbaren Architektur Prozessor und mit einer Anzahl von Hardware-Einheiten, aufweisend folgenden Schritt: - Verändern der Anordnung der Datenbitfolge(n) zumindest eines Datenstrom, welcher der Verarbeitungseinheit bereitgestellt und/oder zu dieser geleitet wird, zum Schutze der Hardware-Einheiten vor Manipulation (von außen).

Die Erfindung ist insbesondere vorteilhaft anwendbar, wenn das vorrangige Schutzziel die korrekte Funktionalität betrifft (Integrität). Dies ist insbesondere in industriellen Anwendungen, z.B. bei kritischen Infrastrukturen, der Fall. Weiterhin erreicht die Erfindung, dass Zusatzfunktionen eines Prozessors bzw. Hardware-CPU, die z.B. als Management Engine bezeichnet werden, mit der ein Computersystem unabhängig von dem eigentlich vorhandenen Betriebssystem gestartet und verwaltet werden kann, verlässlich nicht erreichbar sind. Dies ist insbesondere vorteilhaft, da handelsübliche CPUs solche Zusatzfunktionen aufweisen, die sich jedoch durch den Anwender nicht oder zumindest nicht vollständig deaktivieren lassen.

Des Weiteren ist ein Computerprogramm(-produkt) umfassend Programm-Code vorgesehen, der von mindestens einem Prozessor ausgeführt werden kann und der bewirkt, dass der mindestens eine Prozessor das erfindungsgemäße (Betriebs-)Verfahren und dessen Ausführungsformen ausführt. Das Computerprogramm kann auf einer Einrichtung bzw. Einheit der vorstehend genannten Art ablaufen oder als Computerprogrammprodukt auf einem computerlesbaren Medium gespeichert sein.

Zusätzlich kann eine Variante des Computerprogramm(produktes) mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine sein.

Das Verfahren und Computerprogramm(produkte) können entsprechend der Weiterbildungen/Ausführungsformen der vorgenannten Vorrichtung und deren Weiterbildungen/Ausführungsformen ausgebildet sein.

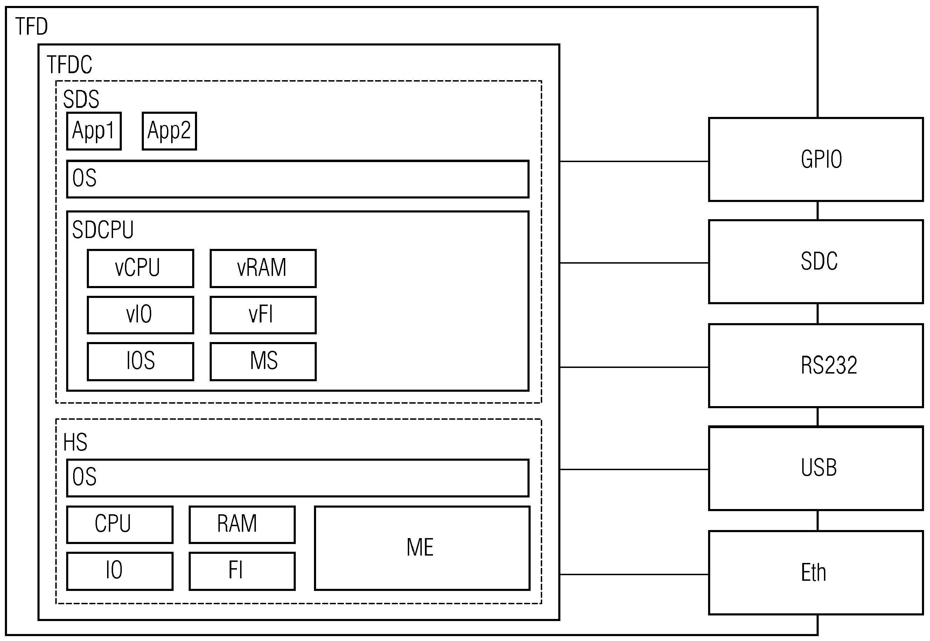

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigt in schematischer Darstellung:
Die Figur zeigt (physikalische, extern zugängliche) Ein-/Ausgabeschnittstellen z.B. einen GPIO-Port GPIO, eine SDCard-Schnittstelle SDC, RS232, USB, Eth, welche jeweils über eine Scrambling-Einheit IOS Daten zwischen der "Datenschleuse" und einer durch Software gestalteten Verarbeitungseinheit SDS, umfassend eine virtuelle CPU vCPU, einen virtuellen Arbeitsspeicher vRAM, einer virtuellen Ein-/Ausgabeschnittstelle vIO und einen virtuellen Flash-Speicher vFl sowie ein zugehöriges Betriebssystem OS und gegebenenfalls darauf aufsetzenden Anwendungen Appl, App2, vorzugsweise randomisiert (zufällig angeordnet und/oder zufällig abgelegt) über den Datenpfad (scrambled = verwürfelt, encrypted = verschlüsselt) erhalten. Zudem können Daten für die bzw. in den Speichern vRAM und vFl durch eine Speicher-Scrambling-Einheit MS zufällig oder verwürfelt abgelegt werden. Somit hat ein Außenstehender keine Kontrolle, welche Daten eine Hardware-Schnittstelle der Hardware-CPU CPU tatsächlich zu sehen bekommt. Es wird mit hoher Verlässlichkeit gewährleistet, dass externe Daten nicht die "Physik" (Hardware) erreichen. Die Scrambling-Einheit IOS kann auch als Sicherheitseinheit bezeichnet werden. Gegebenenfalls zusammen mit der Speicher-Scrambling-Einheit MS kann diese Scrambling-Einheit eine Sicherheitseinheit bilden.

Eine Scrambling-Einheit IOS kann einen Zufallswert als Scrambling-Parameter verwenden. Mehrere Scrambling-Komponenten IOS können den gleichen, unterschiedliche oder jeweils einen für die IOS-Komponenten spezifischen Scrambling-Parameter verwenden. Die Scrambling-Parameter kann der Software-definierten CPU SDCPU vorliegen, um das Scrambling rückgängig machen zu können. Es ist aber auch möglich, dass die Software-definierte CPU SDCPU so ausgestaltet ist, um die verscrambelten Daten zu bearbeiten, ohne die Verscrambelung rückgängig zu machen. Dies ist insbesondere möglich, wenn bei der Verscrambelung die Daten abhängig von einem Scrambling-Parameter umcodiert werden (z.B. indem ein Wert mit dem Scrambling-Parameter addiert oder multipliziert wird). Ein Scrambling-Parameter kann durch einen Zufallszahlengenerator ermittelt werden. Ein Scrambling-Parameter kann z.B. bei der Inbetriebnahme, bei einer Wartung, einem Gerätestart (Boot) und/oder wiederholt im laufenden Betrieb gesetzt bzw. aktualisiert werden.

Bei einem Verscrambeln (Verwürfeln) kann ein Datenwert z.B. verschlüsselt werden, wobei der Scrambling-Parameter als kryptographischer Schlüssel verwendet wird, er kann mit einem Scrambling-Parameter bitweise XOR (Exklusiv Oder) verknüpft werden. Dabei kann die Bitlänge eines Eingabe-/Ausgabeparameters unverändert bleiben. Es ist ebenso möglich, dass bei einem Verscrambeln die Bitlänge größer wird, insbesondere verdoppelt oder verdreifacht wird, d.h. dass die Daten redundant codiert sind, z.B. arithmetisch codiert abhängig von dem Scrambling-Parameter. Dies kann eine Bearbeitung von verscrambelten Daten durch eine Software-definierte CPU SDCPU vereinfachen.

Die Erfindung basiert darauf, dass ein Hardware-Trojaner durch spezielle Bedingungen wie Sensorwerte bzw. Eingabe-Muster aktiviert wird. Es wird daher eine Architektur für eine CPU bzw. ein CPU-basiertes System vorgeschlagen, bei der die externen Eingabedaten bzw. Sensordaten nicht die eigentliche Hardware erreichen, sondern nur eine Software-definierte CPU-Simulation. Dadurch können ggf. vorhandene Schwachstellen der darunterliegenden Hardware-CPU zumindest von außen (insbesondere über eine Netzwerkschnittstelle) nicht aktiviert oder ausgenutzt werden. Der Programmcode (Firmware, Betriebssystem, Anwendungsprogrammcode) eines Steuerungssystems bzw. Steuergeräts TFD (z.B. Feldgerät, Elektronische Kontrolleinheit, Speicherprogrammierbare Steuerung, industrielle IoT-Gerät) wird hierbei in einer Simulation/Emulation ausgeführt, die auf der Hardware-CPU ausgeführt wird. D.h. dass eine Steuereinheit SDCPU ausgeprägt als CPU-Simulator bzw. ein System-Emulator, der auf im Kernteil TFDC des Steuerungsgeräts TFD ausgeführt wird, den Steuerungsprogrammcode ausführt. Die als Kernteil ausgestaltete Vorrichtung TFDC des Steuerungsgeräts TFD umfasst die durch Software gestaltete Verarbeitungseinheit SDS sowie ein nach einer vorgegebenen bzw. vorgebbaren Hardware-Architektur Hardware-System bzw. -Einheit HS, welche zumindest die Hardware-Prozessor bzw. Hardware-CPU CPU und eine weitere oder mehrere Hardwareeinheiten z.B. Arbeitsspeicher RAM, Flash-Speicher Fl und eine Ein-/Ausgabeschnittstelle IO sowie ein Betriebssystem OS umfasst.

Die CPU, auf der der kritische Programmcode des Steuerungssystems ausgeführt wird, ist also eine Art von Softwaredefinierter CPU, welche in der Figur mit der Steuereinheit SDCPU identisch oder zumindest vergleichbar ist. Dies hat den Vorteil, dass Schwachstellen der Hardware-CPU schwerer oder nicht durch den Programmcode ausgenutzt werden können. Auch ist es möglich, die Software-definierte CPU ggf. durch eine Aktualisierung des Simulators/Emulators - wenn erforderlich - zu aktualisieren, ohne die eigentliche Hardware austauschen zu müssen. Beispielsweise kann eine virtuelle X86-CPU auf RISC V Hardware-CPU emuliert werden (oder umgekehrt eine RISC V CPU wird auf einer Hardware X86-CPU emuliert).

Zudem werden weiterhin die Arbeitsdaten der Steuereinheit SDCPU (z.B. Register, Caches, RAM-Speicher, Flash Speicher) zufällig angeordnet, vorzugsweise bei jedem Systemstart bzw. in jeder SDCPU-Instanz unterschiedlich. Dadurch wird weiter erschwert, eine Schwachstelle (Hardware Trojaner) der verwendeten Hardware CPU auszunutzen. Ein Angreifer hat keine Kontrolle, welche Daten die Hardware-CPU tatsächlich zu sehen bekommt. Dazu werden durch den SDCPU-Emulator die Arbeitsdaten, die im Hardware-Arbeitsspeicher und Hardware-Registern im Hardware-System gehalten werden, zufällig angeordnet bzw. verwürfelt werden. Diese Arbeitsdaten können über einen Datenpfad empfangen bzw. gesendet werden, so dass diese empfangenen Daten ggf. schon in ihrer Datenbitfolge verändert (worden) sind und/oder diese in ihrer Datenbitfolge verändert bzw. zufällig angeordnet versendet werden.

Die Veränderung der Anordnung der Datenbitfolge (via Netzwerkschnittstelle z.B. Ethernet)kann durch Kapselung von Datenbits aus der Datenbitfolge in mehrere (IP)-Datenpakete (gleicher oder variabler Länge) erreicht werden. Die in ihrer Anordnung veränderte Datenbitfolge kann einen gesicherten Datenpfad bilden. Die Veränderung der Anordnung der Datenbitfolge kann durch eine kryptographische Verschlüsselung bewirkt werden.

Die vorgenannte Scrambling-Einheit IOS sorgt dafür, dass die Daten, die von außen empfangen werden oder nach außen geschickt werden, nicht im Klartext auf dem Hardware-System bzw. an einer Schnittstelle des Hardware-Systems vorliegen (und daher dort nicht praktikabel einen Hardware Trojaner antriggern können). Erst auf der Software-Ebene der Steuereinheit SDCPU werden die Daten zur Laufzeit in eine Klartextform gebracht. Außerdem werden hier die Speicherinhalte im virtuellen Speicher vRAM, vFl ebenfalls verwürfelt. Statt einer "Verwürfelung", z.B. einem simplen XOR mit einem Zufallswert oder einer Addition oder Multiplikation mit einem Zufallswert, kann vorzugsweise eine kryptographische Verschlüsselung (z.B. auf Basis AES) verwendet werden. Diese dient hier nicht vorrangig dazu, die Vertraulichkeit oder Integrität der übertragenen Daten zu schützen, sondern dient dazu, dass von außen die Daten nicht direkt zugänglich sind bzw. dass bestimmte Klartextdaten der Hardware-CPU direkt bereitgestellt werden. Insbesondere kann damit verhindert werden, dass bestimmte Klartextdaten über eine Netzwerkschnittstelle die Hardware-CPU erreichen.

Weiterhin wird durch das Scrambling/Verschlüsseln der Ein-/Ausgabeschnittstellen verlässlich erreicht, dass eine im Hardware-System (d.h. der Hardware-CPU) evtl. vorhandene Management Engine ME nicht ansprechbar ist.

Weiterhin ist es möglich, dass die Datenschleuse das Zeitverhalten der Außenschnittstelle zufällig (random) gestaltet. Dadurch wird erschwert, über zeitliche Effekte auf die Ausführung in der Steuereinheit SDCPU zu schließen (Seitenkanal) .

Ebenso ist es möglich, dass das Zeitverhalten durch die Datenschleuse deterministisch, unabhängig von der tatsächlichen Ausführungsdauer der Steuereinheit SDCPU, gestaltet wird. Dazu kann eine ausgehende Response-Nachricht, die einer eingegangenen Request-Nachricht zugeordnet ist, zu einem exakten, von der Datenschleuse bestimmten Zeitpunkt ausgegeben werden. Die von der SDCPU erhaltene Antwort wird zwischengespeichert und erst zu dem ermittelten Zeitpunkt extern ausgegeben. Auch bei dieser Ausführungsform wird erschwert oder verhindert, dass über zeitliche Effekte auf die Ausführung in der Steuereinheit SDCPU geschlossen werden kann.

In einer weiteren Ausführungsform können die Ausgabedaten zufällig verzögert oder nur zu bestimmten Zeitpunkten nach Außen gegeben werden (unabhängig vom Zeitpunkt von Eingabedaten) .

Weiterhin können zusätzliche Sicherheitsmaßnahmen in der Software-definierten CPU vorgesehen werden. Spezielle, im Allgemeinen vom jeweiligen Hardware-Chip-Hersteller proprietäre Sicherheits-Funktionen wie Secure Boot, können dadurch einfach verwendet werden. Auch können zusätzliche Laufzeit-Integritätsüberwachungen auf einer tiefen CPU-nahen Ebene unabhängig von der eigentlichen IC-Hardware realisiert werden. Mit anderen Worten können mit einer solchen Software-definierten CPU flexibel Sicherheitsmaßnahmen realisiert werden, die in Hardware nicht verfügbar sind bzw. nicht praktikabel realisierbar sind:
- Secure Boot unabhängig von Hardware-CPU-Sicherheitsfunktionen: Der Steuereinheit SDCPU wird ein Schlüssel- / Hash-Wert übergeben, um das Laden auf vertrauenswürdiger Software zu beschränken (ein Secure Boot der SDCPU kann dadurch unabhängig von einem HWspezifischen Security Boot der Hardware-CPU realisiert werden). Dies ist vorteilhaft, da eine praktische Umsetzung von Secure Boot auf einer Hardware-CPU häufig aufwendig ist und da dazu spezielle Tools und eine Sicherheits-Dokumentation erforderlich ist, die nicht allgemein zugänglich ist.
- Attestation des tatsächlich aktuell ausgeführten Programmcodes. Dies ermöglicht einem Außenstehenden, die Laufzeitintegrität der Steuereinheit SDCPU zu überprüfen, d.h. zu überprüfen, welche Software auf der Steuereinheit ausgeführt wird. Dies geht über eine Attestation eines TPMs (Trusted Platform Module) auf PCs (Personal Computer) hinaus, da nicht bestätigt wird, welche Software geladen wurde, sondern welche Software tatsächlich ausgeführt wird. Wenn die geladene Software zur Laufzeit manipuliert wird, z.B. durch Ausnutzen einer Schwachstelle der Software, so kann dies bei der Steuereinheit SDCPU erkannt werden.

- Laufzeitüberwachung von internen Zuständen der Software-definierten CPU: Dies ermöglicht es, auch interne Zustandsdaten (z.B. Register) der Software-definierten CPU von außen zu überwachen, das bei einer herkömmlichen Hardware-CPU im operativen Betrieb nicht - wenn überhaupt, nur aufwendig - möglich ist.
- Virtual "Fingerprinting" des ausgeführten Programmcodes, ohne tatsächlich den physikalischen Effekt (Stomverbrauchprofil, Elektro-magnetische Abstrahlung) messen zu müssen. Hierdurch kann eine Integritätsüberwachung realisiert werden, die simulierte physikalische Nebeneffekte der Software-definierten CPU auswertet (d.h. nicht das tatsächliche physikalische Stromverbrauchsprofil / Elektro-magnetische-Abstrahlung der Software-definierten CPU, sondern eine von der Software-definierten CPU simulierte, nur digital virtuell vorliegende Information zum simulierten physikalischen Effekt).

Weiterhin ist es möglich, die gleiche Software-definierten CPU doppelt oder mehrfach auf unterschiedlichen Hardware-CPUs auszuführen. Es können die Ausgabedaten und/oder die internen Zustandsdaten der Software-definierten CPU-Instanzen auf Übereinstimmung geprüft werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Vorrichtung (TFDC) zum Betreiben einer durch Software gestalteten Verarbeitungseinheit (SDS) für ein Gerät, insbesondere ein Feldgerät (TFD), wobei die Vorrichtung nach einer vorgegebenen und/oder vorgebbaren Architektur mindestens einen Prozessor (CPU) und eine Anzahl von Hardware-Einheiten umfasst, aufweisend:
eine Sicherheitseinheit (IOS; MS), die dazu eingerichtet ist, eine Veränderung in der Anordnung der Datenbitfolge zumindest eines Datenstroms, welcher der Verarbeitungseinheit (SDS) bereitgestellt und/oder zu dieser geleitet wird, zum Schutze der Hardware-Einheiten vor Manipulation zu bewirken.

2. Vorrichtung nach dem vorhergehenden Anspruch, **dadurch gekennzeichnet, dass** der Datenstrom zur Verarbeitung durch den Prozessor und/oder zur Speicherung in einer oder mehreren Hardware-Einheiten bestimmt ist.

3. Vorrichtung nach einem der vorhergehenden Ansprüche, **dadurch gekennzeichnet, dass** die Verarbeitungseinheit die Anordnung der Datenbitfolge aus der veränderten Anordnung der Datenbitfolge insoweit rekonstruieren kann, dass die Datenbits der rekonstruierten Datenbitfolge vom Prozessor mit Unterstützung durch die Hardware-Einheiten verarbeitet werden können.

4. Vorrichtung nach dem vorhergehenden Anspruch, **dadurch gekennzeichnet, dass** eine Steuereinheit (SDCPU) dazu eingerichtet ist, basierend auf der die Verarbeitungseinheit gestaltenden Software und mit Hilfe der vorgegebenen und/oder vorgebbaren Architektur ein Leiten der rekonstruierten Datenbitfolgen zwischen Prozessor und den Hardwareeinheiten zu steuern.

5. Vorrichtung nach einem der vorhergehenden Ansprüche, **dadurch gekennzeichnet, dass** die Veränderung der Anordnung der Datenbitfolge durch Kapselung von Datenbits aus der Datenbitfolge in mehrere Datenpakete erreichbar ist.

6. Vorrichtung nach dem vorhergehenden Anspruch, **dadurch gekennzeichnet, dass** die Veränderung der Anordnung der Datenbit folge durch eine zeitlich verzögerte Übertragung der Datenpakete erreicht ist.

7. Vorrichtung nach dem vorhergehenden Anspruch 5 oder 6, **dadurch gekennzeichnet, dass** die Reihenfolge der Datenpakete verwürfelt ist.

8. Vorrichtung nach einem der vorhergehenden Ansprüche, **dadurch gekennzeichnet, dass** die in ihrer Anordnung veränderte Datenbitfolge einen gesicherten Datenpfad bildet.

9. Vorrichtung nach einem der vorhergehenden Ansprüche, **dadurch gekennzeichnet, dass** die Veränderung der Anordnung der Datenbitfolge durch eine kryptographische Verschlüsselung bewirkt ist oder bewirkt werden kann.

10. Vorrichtung nach einem der vorhergehenden Ansprüche, **dadurch gekennzeichnet, dass** die Steuereinheit zudem eine Speichereinheit aufweist, die dazu eingerichtet ist, Daten aus der veränderten Datenbitfolge zu speichern.

11. Vorrichtung nach dem vorhergehenden Anspruch, **dadurch gekennzeichnet, dass** die Daten in der Speichereinheit zufällig abgelegt werden kann.

12. Verfahren zum Betreiben einer durch Software gestalteten vertrauenswürdigen (= Schutz vor Manipulation und Angriff von außen) Verarbeitungseinheit (SDS) für ein Gerät (TFD), insbesondere ein Feldgerät, welches eine Vorrichtung (TFDC) mit mindestens einem nach einer vorgegebenen und/oder vorgebbaren Architektur Prozessor (CPU) und mit einer Anzahl von Hardware-Einheiten, aufweisend folgenden Schritt:
- Verändern der Anordnung der Datenbitfolge(n) zumindest eines Datenstrom, welcher der Verarbeitungseinheit bereitgestellt und/oder zu dieser geleitet wird, zum Schutze der Hardware-Einheiten vor Manipulation.

13. Verfahren nach dem vorhergehenden Anspruch, **dadurch gekennzeichnet, dass** der Datenstrom zur Verarbeitung durch den Prozessor und/oder zur Speicherung in einer oder mehreren Hardware-Einheiten bestimmt ist.

14. Verfahren nach einem der vorhergehenden Verfahrensansprüchen, **gekennzeichnet durch** Rekonstruieren der Anordnung der Datenbitfolge aus der veränderten Anordnung der Datenbitfolge insoweit, dass die Datenbits der rekonstruierten Datenbitfolge vom Prozessor mit Unterstützung durch die Hardware-Einheiten verarbeitet werden.

15. Verfahren nach dem vorhergehenden Anspruch, **dadurch gekennzeichnet, dass** basierend auf der die Verarbeitungseinheit gestaltenden Software und mit Hilfe der vorgegebenen und/oder vorgebbaren Architektur ein Leiten der rekonstruierten Datenbitfolgen zwischen Prozessor und den Hardwareeinheiten gesteuert werden.

16. Verfahren nach einem der vorhergehenden Verfahrensansprüche, **dadurch gekennzeichnet, dass** die Veränderung der Anordnung der Datenbitfolge durch Kapselung von Datenbits aus der Datenbitfolge in mehrere Datenpakete erreicht wird.

17. Verfahren nach dem vorhergehenden Anspruch, **dadurch gekennzeichnet, dass** die Veränderung der Anordnung der Datenbit folge durch eine zeitlich verzögerte Übertragung der Datenpakete erreicht wird.

18. Verfahren nach dem vorhergehenden Anspruch 16 oder 17, **dadurch gekennzeichnet, dass** die Reihenfolge der Datenpakete verwürfelt werden.

19. Verfahren nach einem der vorhergehenden Verfahrensansprüche, **dadurch gekennzeichnet, dass** die in ihrer Anordnung veränderte Datenbitfolge einen gesicherten Datenpfad bildet.

20. Verfahren nach einem der vorhergehenden Verfahrensansprüche, **dadurch gekennzeichnet, dass** die Steuereinheit zudem eine Speichereinheit aufweist, die dazu eingerichtet ist, Daten aus der veränderten Datenbitfolge zu speichern.

21. Verfahren nach dem vorhergehenden Anspruch, **dadurch gekennzeichnet, dass** die Daten in der Speichereinheit zufällig abgelegt werden.
